# FASCICULE DE BREVET EUROPEEN

(11) **EP 1 655 205 B1**
(45) Date de publication et mention de la délivrance du brevet: **19.09.2007**
(21) Numéro de dépôt: 05300847.0
(22) Date de dépôt: 24.10.2005
(51) Int. Cl.: B62D 6/00, B62D 101/00, B62D 105/00, B62D 113/00, B62D 119/00

(54) **Système et procédé d'assistance au braquage des roues directrices d'un véhicule automobile**
System und Verfahren zur Lenkhilfe für die lenkbaren Räder eines Kraftfahrzeugs
System and method of steering assistance for steerable wheels of a motor vehicle

(30) Priorité: 09.11.2004 FR 0411937
(43) Date de publication de la demande: 10.05.2006
(73) Titulaire: RENAULT s.a.s., 92100 Boulogne Billancourt (FR)
(72) Inventeur: Fauqueux, Olivier, 78600 Mesnil le Roi (FR); Auvinet, Jannick, 2700 Evreux (FR)

(56) Documents cités:
- WO-A-03/099635

## Description

L'invention porte sur un système et un procédé d'assistance au braquage des roues directrices d'un véhicule automobile.

De façon classique, les véhicules automobiles sont pourvus d'un châssis, d'un habitacle, et de roues reliées au châssis par un mécanisme de suspension avec des roues avant directrices commandées par un volant à la disposition du conducteur dans l'habitacle du véhicule. Entre le volant et les roues, est prévue une colonne de direction solidaire en rotation du volant dont l'extrémité inférieure est pourvue d'un pignon agissant sur une crémaillère permettant de faire tourner les roues autour d'un axe sensiblement vertical, afin d'assurer leur orientation et la rotation du châssis du véhicule.

De tels mécanismes de direction peuvent être pourvus d'une assistance hydraulique ou électrique permettant de réduire les efforts du conducteur, en particulier lors de manoeuvres à l'arrêt, par exemple une manoeuvre de stationnement. De tels mécanismes comprennent généralement un capteur de la position angulaire du volant monté à distance d'un actionneur agissant sur la crémaillère en fonction de la position angulaire détectée par le capteur auquel il est relié par une liaison filaire.

Les systèmes d'assistance au braquage des roues directrices d'un véhicule automobile ne permettent pas au conducteur de se rendre compte de façon significative d'une perte d'adhérence des roues du véhicule.

Les documents US 4 527 653, US 5 904 223, et US 6 062 336 portent sur des systèmes et procédés d'assistance au braquage des roues directrices d'un véhicule automobile, pour lesquels, lorsque les roues du véhicule ont une adhérence critique, l'assistance au braquage des roues directrices est diminuée.

De tels systèmes et procédés, lors d'une perte d'adhérence des roues du véhicule, diminuent l'assistance au braquage, et augmentent alors le couple exercé sur le volant et ressenti par le conducteur. Ceci a pour effet de masquer complètement le phénomène de perte d'adhérence. Cette augmentation de couple exercé sur le volant induit en erreur le conducteur, qui a l'impression que l'adhérence des roues est renforcée.

Le documents WO 03/099635 et EP 1508502 divulguent une détermination si oui ou non le degré d'adhérence estimé est inférieur à une valeur prédéterminée. Lorsque le degré d'adhérence estimé est inférieur à la valeur prédéterminée, le conducteur est averti que le degré d'adhérence estimé des roues avant du véhicule est proche d'une limite. Ainsi, le conducteur peut savoir que le degré d'adhérence estimé est inférieur à la valeur prédéterminée. L'avertissment au conducteur peut être fait par une augmentation de la direction assistée ou assistance au braquage.

Aussi, selon un aspect de l'invention, il est proposé un système d'assistance au braquage des roues directrices d'un véhicule automobile. Le système comprend des moyens d'assistance au braquage agissant sur des moyens de braquage des roues directrices, des moyens de commande pilotant les moyens d'assistance au braquage, et un dispositif de détermination d'une information représentative de l'adhérence des roues du véhicule. En outre, le système comprend des moyens d'augmentation d'assistance pour augmenter l'assistance au braquage dès qu'une valeur de l'information représentative de l'adhérence des roues délivrée par le dispositif de détermination est inférieure à une valeur de seuil caractéristique d'une limite d'adhérence des roues du véhicule.

L'augmentation de l'assistance au braquage lorsque l'adhérence des roues est inférieure à une valeur limite entraîne une diminution du couple exercé sur le volant et ressenti par le conducteur. La différence entre le couple exercé sur le volant dans des conditions de conduite sans perte d'adhérence des roues, et le couple exercé sur le volant dans des conditions de conduite avec perte d'adhérence des roues peut alors aisément être ressentie par le conducteur par l'intermédiaire du volant.

Dans un mode de réalisation préféré, le système comprend un capteur de vitesse pour fournir une valeur de la vitesse du véhicule. En outre, les moyens d'augmentation d'assistance comprennent des moyens de modification capables de modifier une valeur de la vitesse du véhicule, transmise par le capteur de vitesse aux moyens de commande et utilisée pour élaborer un niveau d'assistance au braquage, lorsque la valeur de l'information représentative de l'adhérence des roues, transmise par le dispositif de détermination, est inférieure à la valeur de seuil.

L'augmentation de l'assistance au braquage des roues directrices est effectuée en modifiant la valeur de la vitesse du véhicule transmise aux moyens de commande, lorsqu'on détecte une perte d'adhérence des roues du véhicule. En effet, les moyens de commande pilotent les moyens d'assistance au braquage notamment en fonction de la valeur de la vitesse du véhicule.

Dans un mode réalisation avantageux, les moyens de modification sont adaptés pour diminuer une valeur de la vitesse du véhicule transmise par le capteur de vitesse, lorsque le dispositif de détermination transmet une valeur de l'information représentative de l'adhérence des roues inférieure à la valeur de seuil.

La modification de la valeur de la vitesse du véhicule transmise aux moyens de commande permettant d'obtenir une augmentation de l'assistance au braquage des roues directrices est une diminution de la valeur de la vitesse du véhicule délivrée par le capteur de vitesse. En effet, les stratégies des commandes de direction assistées étant de diminuer l'assistance lorsque la vitesse du véhicule augmente. En effet, plus la vitesse est élevé, moins l'assistance à la direction doit être importante, pour diminuer les risques d'accident.

Dans le cas de perte d'adhérence, le fait de diminuer la valeur de la vitesse du véhicule transmise par le capteur de vitesse, sans toutefois agir sur la vitesse réelle du véhicule, amène le système d'assistance à réagir en augmentant l'assistance au braquage, ce qui permet de diminuer le couple exercé sur le volant. Le conducteur peut alors ressentir une perte d'adhérence des roues par un ressenti significatif de variation du couple exercé sur le volant.

Dans un mode de réalisation préféré, le système comprend, en outre, un volant solidaire en rotation d'une colonne de direction, ainsi qu'un capteur de couple et un capteur d'angle montés derrière le volant sur la colonne de direction. Les moyens de commande sont adaptés pour commander les moyens d'assistance au braquage des roues directrices à partir de paramètres de fonctionnement du véhicule comprenant un couple exercé sur le volant et transmis par le capteur de couple, une position angulaire du volant transmise par le capteur d'angle, et une vitesse, modifiée ou non, transmise par les moyens de modification.

Dans un mode de réalisation avantageux, les moyens d'assistance au braquage des roues directrices sont des moyens électriques ou hydrauliques.

Selon un autre aspect de l'invention, il est également proposé un procédé d'assistance au braquage des roues directrices d'un véhicule automobile, dans lequel on augmente l'assistance au braquage dès que la valeur d'une information représentative de l'adhérence des roues est inférieure à une valeur de seuil caractéristique d'une limite d'adhérence des roues du véhicule.

Dans un mode de mise en oeuvre préféré, on augmente l'assistance au braquage en modifiant une valeur de la vitesse du véhicule utilisée pour élaborer un niveau d'assistance au braquage, lorsque la valeur de l'information représentative de l'adhérence des roues est inférieure à la valeur de seuil.

Dans un mode de mise en oeuvre avantageux, on augmente l'assistance au braquage en diminuant la valeur de la vitesse du véhicule, lorsque la valeur de l'information représentative de l'adhérence des roues est inférieure à la valeur de seuil.

Dans un mode de mise en oeuvre préféré, on commande l'assistance au braquage des roues directrices à partir de paramètres de fonctionnement du véhicule comprenant un couple exercé sur le volant, une position angulaire du volant, et la vitesse modifiée ou non du véhicule.

D'autres buts, caractéristiques et avantages de l'invention apparaîtront à la lecture de la description suivante, donnée uniquement à titre d'exemple nullement limitatif, et faite en référence aux dessins annexés, sur lesquels :
- la figure 1 est un schéma synoptique d'un système selon un aspect l'invention ;
- la figure 2 illustre un mode de mise en oeuvre du procédé selon l' invention ; et
- la figure 3 illustre la différence de couple exercé sur le volant, entre une conduite sans perte d'adhérence des roues et avec perte d'adhérence des roues, pour une assistance au braquage classique et une assistance au braquage selon l'invention.

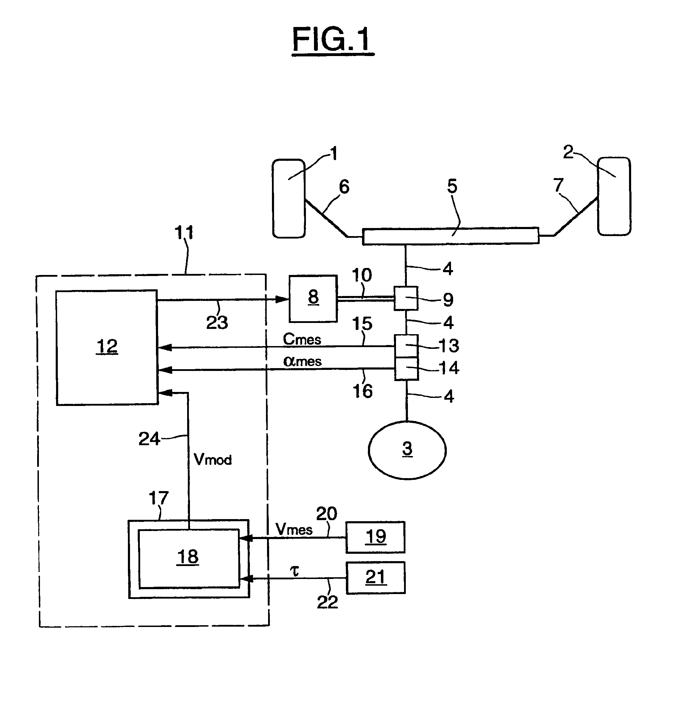

Comme on peut le voir sur la figure 1, le véhicule comprend deux roues directrices 1 et 2. Le véhicule est équipé d'un volant 3 solidaire en rotation d'une colonne de direction 4 liée à une crémaillère 5 qui transforme un mouvement de rotation du volant 3 en un mouvement de translation. La transmission d'un mouvement de translation de la crémaillère 5 vers les deux roues directrices 1 et 2 est respectivement assurée par des biellettes 6 et 7, qui transforment un mouvement de translation de la crémaillère 5 en un mouvement de rotation des roues directrices 1 et 2.

Un module 8 d'assistance au braquage des roues directrices 1 et 2 génère un effort d'assistance sur la colonne de direction 4 par l'intermédiaire d'un réducteur 9. Le module d'assistance 8 est relié au réducteur 9 par un arbre de transmission 10. Ce module d'assistance 8 peut par exemple être un moteur électrique ou un dispositif hydraulique.

Une unité de commande 11 gérant divers dispositifs embarqués à bord du véhicule comprend un module de commande 12 qui pilote le module 8 d'assistance au braquage des roues directrices 1 et 2.

Un capteur de couple 13 et un capteur d'angle 14 sont montés sur la colonne de direction 4, juste derrière le volant 3. Le capteur de couple 13 transmet au module de commande 12 un couple Cᵥₒₗ exercé sur le volant 3, c'est-à-dire sur la colonne de direction 4 qui est solidaire en rotation du volant 3, par l'intermédiaire d'une connexion 15. Le capteur d'angle 14 transmet au module de commande 12 une position angulaire du volant αᵥₒₗ par rapport à une position de référence définie, par l'intermédiaire d'une connexion 16.

L'unité de commande 11 comprend également un module 17 d'augmentation de l'assistance au braquage des roues directrices 1 et 2. Le module d'augmentation d'assistance 17 comprend un module de modification 18.

Un capteur de vitesse 19 délivre en sortie, par une connexion 20, une vitesse mesurée vₘₑₛ du véhicule, à destination du module de modification 18.

Un dispositif de détermination 21 délivre en sortie, par une connexion 22, une information τ représentative de l'adhérence des roues du véhicule, à destination du module de modification 18.

Un tel dispositif de détermination 21 d'une information τ représentative de l'adhérence des roues du véhicule est par exemple fournie par des systèmes tels qu'un système de freinage ABS.

Le module de commande 12 pilote le module 8 d'assistance au braquage des roues directrices 1 et 2, par l'intermédiaire d'une connexion 23.

Lorsque la valeur de l'information τ représentative de l'adhérence des roues du véhicule, est inférieure à une valeur de seuil caractéristique d'une limite d'adhérence des roues du véhicule, le module de modification 18 va transmettre au module de commande 12 une valeur de vitesse v_{mod} modifiée. Plus précisément, la valeur de vitesse v_{mod} transmise au module de commande 12 est inférieure à la vitesse réelle mesurée vₘₑₛ du véhicule. La vitesse v_{mod} est transmise du module de modification 18 au module de commande 12 par une connexion 24.

Les modules de commande connus fonctionnent de manière à diminuer l'assistance au braquage des roues directrices 1 et 2 lorsque la vitesse augmente, diminuer la valeur de la vitesse transmise au module de commande 12 entraîne une augmentation de l'aide au braquage des roues directrices 1 et 2.

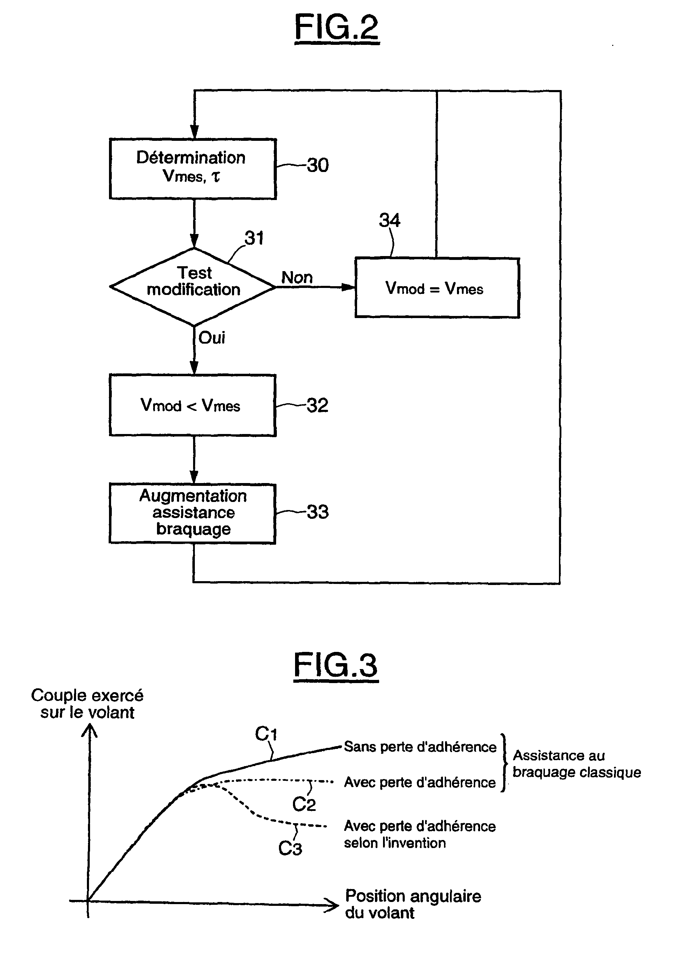

Comme illustré sur la figure 2, lors d'une étape 30, on détermine, au moyen du capteur de vitesse 19, la valeur de la vitesse du véhicule vₘₑₛ, et on détermine, au moyen du dispositif de détermination 21, la valeur de l'information τ représentative de l'adhérence des roues du véhicule.

Puis on teste, durant une étape 31, s'il est nécessaire de modifier la valeur de la vitesse vₘₑₛ du véhicule mesurée par le capteur de vitesse 19, en fonction de la valeur de l'information τ représentative de l'adhérence des roues du véhicule. Si la valeur de l'information τ représentative de l'adhérence des roues du véhicule est inférieure à une valeur de seuil représentative d'une limite d'adhérence des roues du véhicule, le module de modification 18 modifie, lors d'une étape 32, la valeur de la vitesse mesurée vₘₑₛ en une valeur de vitesse v_{mod} transmise au module de commande 12. La valeur modifiée de la vitesse v_{mod} est alors inférieure à la vitesse mesurée vₘₑₛ du véhicule, afin que le module de commande 12 augmente l'assistance au braquage des roues directrices 1 et 2, lors d'une étape 33.

Si la valeur de l'information τ représentative de l'adhérence des roues du véhicule ne traduit pas une adhérence des roues du véhicule inférieure à la limite d'adhérence, alors le module de modification 18 ne modifie pas la valeur de la vitesse mesurée vₘₑₛ, et transmet au module de commande une valeur de la vitesse modifiée v_{mod} égale à la vitesse mesurée vₘₑₛ du véhicule, lors d'une étape 34.

La figure 3 est un ensemble de courbes C₁, C₂, et C₃, représentant le couple exercé sur le volant 3, en fonction de la position angulaire du volant.

La courbe C₁ est représentative d'une assistance au braquage classique dans une situation de conduite sans perte d'adhérence.

La courbe C₂ est représentative d'une assistance au braquage classique dans une situation de conduite avec perte d'adhérence.

Enfin, la courbe C₃ est représentative d'une assistance au braquage, avec perte d'adhérence, selon l'invention.

Les trois courbes sont confondues pour des valeurs de positions angulaires du volant faibles.

Pour des valeurs de positions angulaires plus élevées, les trois courbes se distinguent nettement. La courbe C₁ est alors supérieure à la courbe C₂, elle-même supérieure à la courbe C₃, pour de telles valeurs de positions angulaires plus élevées. L'écart entre les courbes C₁ et C₂ représente la variation du couple exercé sur le volant 3, entre une conduite sans perte d'adhérence des roues, et une conduite avec perte d'adhérence des roues, pour des systèmes d'aide au braquage des roues directrices 1 et 2, ou direction assistée. Cette différence de couple est faible, et ne permet pas au conducteur de ressentir, par l'intermédiaire du couple exercé sur le volant, une perte d'adhérence des roues du véhicule.

L'invention permet au conducteur de se rendre compte d'une perte d'adhérence des roues du véhicule, comme le montre la courbe C₃. En effet, lorsqu'une perte d'adhérence est détectée par le système, l'assistance au braquage des roues directrices est augmentée, ce qui diminue de manière significative le couple exercé sur le volant. La différence entre le couple exercé sur le volant, ressenti par le conducteur, sans perte d'adhérence des roues et avec perte d'adhérence des roues, représentée par l'écart entre les courbes C₁ et C₃, est alors nettement augmentée, par rapport à l'écart entre les courbes C₁ et C₂ illustrant des systèmes d'assistance au braquage classiques.

L'invention permet donc d'avoir un système d'assistance au braquage des roues directrices d'un véhicule automobile, qui n'atténue pas la différence de couple exercé sur le volant entre une conduite sans perte d'adhérence et une conduite avec perte d'adhérence. Le conducteur peut alors ressentir aisément une perte d'adhérence du véhicule, et ainsi en tenir compte.

## Revendications

1. Système d'assistance au braquage des roues directrices (1, 2) d'un véhicule automobile, comprenant des moyens d'assistance au braquage (8) agissant sur des moyens de braquage (5, 7) des roues directrices (1, 2), des moyens de commande (12) pilotant les moyens d'assistance au braquage (8), et un dispositif (21) de détermination d'une information (τ) représentative de l'adhérence des roues du véhicule, ledit système comprenant en outre des moyens d'augmentation d'assistance (17) pour augmenter l'assistance au braquage dès qu'une valeur de l'information (τ) représentative de l'adhérence des roues et délivrée par le dispositif de détermination (21) est inférieure à une valeur de seuil caractéristique d'une limite d'adhérence des roues du véhicule, **caractérisé en ce qu'**il comprend un capteur de vitesse (19) pour fournir une valeur (vₘₑₛ) de la vitesse du véhicule, et **en ce que** les moyens d'augmentation d'assistance (17) comprennent des moyens de modification (18) capables de modifier la valeur (vₘₑₛ) de la vitesse du véhicule, transmise par le capteur de vitesse (19) aux moyens de commande (12) et utilisée pour élaborer un niveau d'assistance au braquage, lorsque la valeur de l'information (τ) représentative de l'adhérence des roues, transmise par le dispositif de détermination (21), est inférieure à la valeur de seuil.

2. Système selon la revendication 1, **caractérisé en ce que** les moyens de modification (18) sont adaptés pour diminuer une valeur (Vₘₑₛ) de la vitesse du véhicule transmise par le capteur de vitesse (19), lorsque le dispositif de détermination (21) transmet une valeur de l'information (τ) représentative de l'adhérence des roues inférieure à la valeur de seuil.

3. Système selon la revendication 1 ou 2, **caractérisé en ce que** le système comprend, en outre, un volant (3) solidaire en rotation d'une colonne de direction (4), ainsi qu'un capteur de couple (13) et un capteur d'angle (14) montés derrière le volant (3) sur la colonne de direction (4), et **en ce que** les moyens de commande (12) sont adaptés pour commander les moyens d'assistance au braquage (8) des roues directrices (1, 2) à partir de paramètres de fonctionnement du véhicule comprenant un couple (Cᵥₒₗ) exercé sur le volant et transmis par le capteur de couple, une position angulaire du volant (αᵥₒₗ) transmise par le capteur d'angle (14), et une vitesse (ν_{mod}), modifiée ou non, transmise par les moyens de modification (18).

4. Système selon l'une quelconque des revendications 1 à 3, **caractérisé en ce que** les moyens d'assistance au braquage (8) des roues directrices sont des moyens électriques ou hydrauliques.

5. Procédé d'assistance au braquage des roues directrices (1, 2) d'un véhicule automobile, dans lequel on augmente l'assistance au braquage dès que la valeur d'une information (τ) représentative de l'adhérence des roues est inférieure à une valeur de seuil caractéristique d'une limite d'adhérence des roues du véhicule, **caractérisé en ce que** l'on augmente l'assistance au braquage en modifiant une valeur (vₘₑₛ) de la vitesse du véhicule utilisée pour élaborer un niveau d'assistance au braquage, lorsque la valeur de l'information (τ) représentative de l'adhérence des roues est inférieure à la valeur de seuil.

6. Procédé selon la revendication 5, **caractérisé en ce que** l'on augmente l'assistance au braquage en diminuant la valeur de la vitesse (vₘₑₛ) du véhicule, lorsque la valeur de l'information (τ) représentative de l'adhérence des roues est inférieure à la valeur de seuil.

7. Procédé selon la revendication 5 ou 6, **caractérisé en ce que** l'on commande l'assistance au braquage des roues directrices (1, 2) à partir de paramètres de fonctionnement du véhicule comprenant un couple (Cᵥₒₗ) exercé sur le volant, une position angulaire du volant (αᵥₒₗ), et la vitesse (v_{mod}) modifiée ou non du véhicule.

## Claims

1. Power assisted steering system for assisting with steering the steered wheels (1, 2) of a motor vehicle, comprising power assisted steering means (8) acting on means (5, 7) of steering the steered wheels (1, 2), control means (12) controlling the power assisted steering means (8) and a device (21) for determining an item of information (τ) representative of the adhesion of the wheels of the vehicle, the said system further comprising assistance boosting means (17) for boosting the steering assistance as soon as a value of the information item (τ) representative of the adhesion of the wheels and delivered by the determining device (21) drops below a threshold value characteristic of a limit of adhesion of the wheels of the vehicle, **characterized in that** the system comprises a speed sensor (19) for supplying a value (vₘₑₐₛ) of the speed of the vehicle, and **in that** the assistance boosting means (17) comprise modifying means (18) capable of modifying the value (vₘₑₐₛ) of the speed of the vehicle as transmitted by the speed sensor (19) to the control means (12) and used to evaluate a level of steering assistance when the value of the information item (τ) representative of the adhesion of the wheels and transmitted by the determining device (21) is below the threshold value.

2. System according to Claim 1, **characterized in that** the modifying means (18) are designed to reduce a value (vₘₑₐₛ) of the speed of the vehicle as transmitted by the speed sensor (19) when the determining device (21) transmits a value of the information item (τ) representative of the adhesion of the wheels that is below the threshold value.

3. System according to Claim 1 or 2, **characterized in that** the system further comprises a steering wheel (3) which rotates as one with a steering column (4), and a torque sensor (13) and an angle sensor (14) which are mounted behind the steering wheel (3) on the steering column (4), and **in that** the control means (12) are able to control the power assisted steering means (8) that assist with the steering of the steered wheels (1, 2) on the basis of operating parameters of the vehicle including a torque (C_{sw}) exerted on the steering wheel and transmitted by the torque sensor, an angular position of the steering wheel (α_{sw}) transmitted by the angle sensor (14), and a speed (v_{mod}), which may or may not be modified, transmitted by the modifying means (18).

4. System according to any one of Claims 1 to 3, **characterized in that** the power assisted steering means (8) for assisting with the steering of the steered wheels are electrical or hydraulic means.

5. Power assisted steering method for assisting with the steering of the steered wheels (1, 2) of a motor vehicle, in which the power assistance for the steering is boosted once the value of an item of information (τ) representative of the adhesion of the wheels drops below a threshold value characteristic of a limit of adhesion of the wheels of the vehicle, **characterized in that** the steering assistance is boosted by modifying a value (vₘₑₐₛ) of the speed of the vehicle used to evaluate a level of steering assistance, when the value of the information item (τ) representative of the adhesion of the wheels is below the threshold value.

6. Method according to Claim 5, **characterized in that** the steering assistance is boosted by reducing the value of the speed (Vₘₑₐₛ) of the vehicle when the value of the information item (τ) representative of the adhesion of the wheels is below the threshold value.

7. Method according to Claim 5 or 6, **characterized in that** the power assisted steering that assists with steering the steered wheels (1, 2) is controlled on the basis of operating parameters of the vehicle including a torque (C_{sw}) exerted on the steering wheel, an angular position of the steering wheel (α_{sw}) and the modified or unmodified speed (V_{mod}) of the vehicle.

## Patentansprüche

1. System zur Lenkhilfe für die lenkbaren Räder (1, 2) eines Kraftfahrzeugs, umfassend Lenkhilfsmittel (8), die auf die Lenkmittel (5, 7) der lenkbaren Räder (1, 2) wirken, Steuermittel (12), die die Lenkhilfsmittel (8) steuern, und eine Vorrichtung (21) zur Bestimmung einer die Haftung der Fahrzeugräder darstellenden Information (τ), wobei das System ferner Hilfsverstärkungsmittel (17) umfasst, um die Lenkhilfe zu verstärken, wenn ein die Radhaftung darstellender Informationswert (τ), der von der Bestimmungsvorrichtung (21) geliefert wird, unterhalb eines Schwellwerts liegt, welcher einen Haftungsgrenzwert der Fahrzeugräder **kennzeichnet, dadurch gekennzeichnet, dass** es einen Geschwindigkeitssensor (19) umfasst, um einen Wert (vₘₑₛ) der Fahrzeuggeschwindigkeit zu liefern, und dass die Hilfsverstärkungsmittel (17) Modifikationsmittel (18) umfassen, die in der Lage sind, den Wert (vₘₑₛ) der Fahrzeuggeschwindigkeit zu modifizieren, welcher von dem Geschwindigkeitssensor (19) zu den Steuermitteln (12) gesendet und zur Erstellung eines Lenkhilfsniveaus verwendet wird, wenn der die Radhaftung darstellende Informationswert (τ), welcher von der Bestimmungsvorrichtung (21) gesendet wird, unter dem Schwellwert liegt.

2. System nach Anspruch 1, **dadurch gekennzeichnet, dass** die Modifikationsmittel (18) dazu ausgelegt sind, einen Wert (vₘₑₛ) der Fahrzeuggeschwindigkeit, welcher von dem Geschwindigkeitssensor (19) gesendet wird, zu verringern, wenn die Bestimmungsvorrichtung (21) einen die Radhaftung darstellenden Informationswert (τ) sendet, welcher unter dem Schwellwert liegt.

3. System nach Anspruch 1 oder 2, **dadurch gekennzeichnet, dass** das System ferner ein Lenkrad (3), welches sich mit einer Lenksäule (4) dreht, und einen Drehmomentsensor (13) und einen Winkelsensor (14), welche hinter dem Lenkrad (3) an der Lenksäule (4) angebracht sind, umfasst, und **dadurch**, dass die Steuermittel (12) dazu ausgelegt sind, die Lenkhilfsmittel (8) der lenkbaren Räder (1, 2) ausgehend von Funktionsparametern des Fahrzeugs zu steuern, welche ein auf das Lenkrad ausgeübtes und von dem Drehmomentsensor gesendetes Drehmoment (Cᵥₒₗ), eine von dem Winkelsensor (14) gesendete Winkelposition des Lenkrads (αᵥₒₗ) und eine gegebenenfalls modifizierte, von den Modifikationsmitteln (18) gesendete Geschwindigkeit (V_{mod}) umfassen.

4. System nach einem der Ansprüche 1 bis 3, **dadurch gekennzeichnet, dass** es sich bei den Lenkhilfsmitteln (8) der lenkbaren Räder um elektrische oder hydraulische Mittel handelt.

5. Verfahren zur Lenkhilfe für die lenkbaren Räder (1, 2) eines Kraftfahrzeugs, bei dem die Lenkhilfe verstärkt wird, wenn der Wert einer die Radhaftung darstellenden Information (τ) unter einem Schwellwert liegt, welcher die Haftungsgrenze der Fahrzeugräder **kennzeichnet, dadurch gekennzeichnet, dass** die Lenkhilfe verstärkt wird, indem ein Wert (vₘₑₛ) der Fahrzeuggeschwindigkeit modifiziert wird, welcher zum Erstellen eines Lenkhilfeniveaus verwendet wird, wenn der die Radhaftung darstellende Informationswert (τ) unter dem Schwellwert liegt.

6. Verfahren nach Anspruch 5, **dadurch gekennzeichnet, dass** die Lenkhilfe verstärkt wird, indem der Wert (Vₘₑₛ) der Fahrzeuggeschwindigkeit verringert wird, wenn der die Radhaftung darstellende Informationswert (τ) unter dem Schwellwert liegt.

7. Verfahren nach Anspruch 5 oder 6, **dadurch gekennzeichnet, dass** die Lenkhilfe der lenkbaren Räder (1, 2) ausgehend von Funktionsparametern des Fahrzeugs gesteuert wird, welche ein auf das Lenkrad ausgeübtes Drehmoment (Cᵥₒₗ), eine Winkelposition des Lenkrads (αᵥₒₗ) und die gegebenenfalls modifizierte Geschwindigkeit (v_{mod}) des Fahrzeugs umfassen.
